# FASCICULE DE BREVET EUROPEEN

(11) **EP 3 833 527 B1**
(45) Date de publication et mention de la délivrance du brevet: **28.09.2022**
(21) Numéro de dépôt: 19765536.8
(22) Date de dépôt: 02.08.2019
(51) Int. Cl.: B29C 49/66, B29C 49/64, B29C 49/42, B29C 49/06, B29K 67/00, B29L 31/00

(54) **DISPOSITIF DE MANUTENTION DE PREFORMES, EQUIPE D'UN DISPOSITIF DE REFROIDISSEMENT REGLABLE EN HAUTEUR**
HANDHABUNGSVORRICHTUNG FÜR VORFORMEN MIT EINER HÖHENVERSTELLBAREN KÜHLVORRICHTUNG
PREFORM HANDLING DEVICE EQUIPPED WITH A HEIGHT-ADJUSTABLE COOLING DEVICE

(30) Priorité: 09.08.2018 FR 1857421
(43) Date de publication de la demande: 16.06.2021
(73) Titulaire: Sidel Participations, 76930 Octeville-sur-Mer (FR)
(72) Inventeur: LE PECHOUR, Anthony, 76930 Octeville-Sur-Mer (FR); CHOMEL, Nicolas, 76930 Octeville-Sur-Mer (FR); CARBOGNANI, Andrea, 76930 Octeville-Sur-Mer (FR); PRONI, Angelo, 76930 Octeville-Sur-Mer (FR)
(74) Mandataire: Sidel Group
(86) Numéro de dépôt international: PCT/FR2019/051894
(87) Numéro de publication internationale: WO 2020/030870

(56) Documents cités:
- DE-A1-102008 032 123
- US-A1- 2007 235 906
- US-A1- 2018 194 499

## Description

L'invention a trait au domaine de la manutention des récipients en matière plastique (par ex. en PET). L'arrière plan technique est décrit dans le document US2018/194499A1.

Les récipients en matière plastique sont classiquement formés par soufflage ou étirage soufflage à partir d'ébauches, qui sont (le plus souvent) des préformes ou (plus rarement) des récipients intermédiaires ayant subi un préformage mais n'ayant pas encore la forme finale du modèle de récipient à former.

Une ébauche comprend un corps (généralement cylindrique), un col qui s'ouvre à une première extrémité du corps et présente sa forme finale, et un fond qui ferme le corps à une deuxième extrémité de celui-ci, opposée au col.

Les ébauches subissent, avant d'être formées en récipients, une chauffe dans une unité de conditionnement thermique (également appelée « four »), chauffe au cours de laquelle la température du corps et du fond est portée à une valeur supérieure à la température de transition vitreuse de la matière (laquelle est d'environ 80°C dans le cas du PET), de sorte à les rendre malléables et ainsi faciliter la déformation induite par le soufflage.

Les ébauches ainsi chauffées sont ensuite transférées vers une unité de formage (également appelée « souffleuse ») équipée d'une pluralité de moules chacun pourvu d'une paroi à l'empreinte du modèle de récipient à former ; un fluide sous pression (généralement de l'air) est injecté dans chaque ébauche pour plaquer le corps et le fond contre la paroi du moule et ainsi conférer à l'ébauche la forme du récipient.

Les récipients ainsi formés sont ensuite évacués de leurs moules respectifs et transférés vers une remplisseuse où un produit (sous forme liquide, pulvérulente ou pâteuse) est déversé par le col. Les récipients seront ensuite étiquetés, bouchés, et le cas échéant groupés en packs avant d'être expédiés vers leurs points de vente.

La cadence de production d'une telle séquence est très élevée ; elle dépasse aujourd'hui 40 000 récipients par heure. La vitesse de déplacement des récipients est d'ailleurs si élevée (de l'ordre de 1 m/s) que, s'ils sont transférés directement (et au plus court) de la souffleuse à la remplisseuse, leur fond (plus épais que le corps) n'a pas le temps de refroidir et risque de se déformer sous la seule pression du produit déversé ainsi que sous l'effet de la force de gravité.

Pour éviter cette déformation, une première solution consiste à laisser le fond refroidir de lui-même ; il faut alors constituer un stock tampon de récipients entre la souffleuse et la remplisseuse. Cette solution existe ; elle n'est toutefois pas satisfaisante car encombrante.

Une deuxième solution consiste à forcer le refroidissement du fond par projection d'un fluide. Deux techniques sont connues :
- La voie humide : c'est un liquide (froid) qui est propulsé sur le fond. Cette technique, dont une version est décrite dans le brevet européen EP1778455 (Sidel), est efficace mais elle nécessite une complexe installation d'alimentation, de récupération et de recyclage (ou de retraitement) du liquide ;
- La voie sèche : c'est un gaz qui est propulsé sur le fond. Cette technique, dont une version est décrite dans le brevet européen EP2307184 (Krones), offre plusieurs avantages par rapport à la voie humide : premièrement, elle est plus propre ; deuxièmement, elle est d'exploitation plus simple car elle permet de se raccorder au circuit d'alimentation en gaz de la souffleuse et ne nécessite aucun recyclage ou retraitement.

L'installation proposée par le brevet EP2307184 (Krones) précité comprend une roue pourvue de pinces de préhension des récipients par leur col, et un dispositif d'amenée positionné à l'aplomb des récipients, qui comprend un collecteur alimenté par des injecteurs et pourvu d'une série de buses s'ouvrant chacune vers le fond d'un récipient pour y propulser le gaz de refroidissement. Il est indiqué que, pour s'adapter à la taille des récipients, le dispositif d'amenée est réglable en hauteur. Cette installation présente un défaut d'encombrement (et donc d'inertie), notamment en raison de la disposition des injecteurs, dont on voit mal, par ailleurs, comment il est possible de les alimenter en gaz sous pression alors même que l'installation est tournante.

L'invention vise à proposer, dans le cadre d'un refroidissement par vois sèche, un dispositif de manutention de récipients dont l'encombrement et l'alimentation des injecteurs soient optimisés

A cet effet, il est proposé un dispositif de manutention de récipients en matière plastique ayant chacun un corps, un col et un fond, ce dispositif comprenant :
- Une roue de transfert pourvue, sur une périphérie, d'une pluralité d'organes individuels de préhension des récipients par leur col, cette roue étant entraînée en rotation autour d'un axe vertical ;
- Un dispositif de refroidissement des fonds des récipients, qui comprend :
   o Un circuit d'alimentation en gaz sous pression ;
   o Un collecteur monté sous la roue de transfert et solidaire en rotation de celle-ci, ce collecteur présentant une paroi interne et une paroi externe opposées et étant pourvu d'un canal périphérique de distribution du gaz et percé d'ouvertures orientées vers les fonds des récipients, ce collecteur étant réglable en position verticale par rapport à la roue de transfert en étant monté coulissant par rapport à des glissières solidaires de la roue de transfert ;
   o Une pluralité d'injecteurs raccordés au circuit d'alimentation, branchés sur la paroi interne du collecteur et configurés pour refroidir une fraction du gaz issu de celui-ci et injecter cette fraction refroidie dans le canal périphérique de distribution ;
   o Un tube par lequel circule le gaz et qui forme une glissière guidant la translation verticale du collecteur lors de son réglage en position ; Un distributeur fluidique, fixé sur la roue de transfert et relié aux injecteurs.

Diverses caractéristiques supplémentaires peuvent être prévues, seules ou en combinaison. Ainsi, par exemple :
- chaque glissière est solidaire de la roue de transfert.
- Le circuit d'alimentation comprend :
   o Une noix de liaison sur laquelle le tube est branché par une extrémité inférieure, et
   o Une canule qui, par une extrémité inférieure, est branchée sur la noix de liaison et, par une extrémité supérieure, est solidaire du collecteur.
- Le circuit d'alimentation comprend au moins deux injecteurs.
- Le circuit d'alimentation comprend un raccord en T et une paire de tuyaux qui relient chacun le raccord en T à un injecteur.
- Chaque injecteur est orienté suivant un axe qui forme, avec une tangente au canal périphérique de distribution, un angle aigu.
- Les ouvertures sont inclinées par rapport à la verticale.
- L'angle d'inclinaison des ouvertures est compris entre 30° et 60°.
- L'injecteur est un tube de Ranque-Hilsch.
- Le collecteur est réalisé dans une matière plastique telle que polyoxyméthylène.
- Chaque glissière forme un tube par lequel circule le gaz pour l'alimentation d'au moins un injecteur.
- Le circuit d'alimentation comprend :
   o Une noix de liaison sur laquelle le tube est branché par une extrémité inférieure, et
   o Une canule qui, par une extrémité inférieure, est branchée sur la noix de liaison et, par une extrémité supérieure, est solidaire du collecteur.

Le dispositif comprend des tiges filetées synchronisées, fixées, par une extrémité supérieure, à la roue, chaque tige filetée étant en prise hélicoïdale avec un écrou solidaire du collecteur.

Le dispositif comprend des tubes reliés chacun, par une embouchure supérieure, au distributeur et, par un raccord double, à deux injecteurs par l'intermédiaire de flexibles.

D'autres objets et avantages de l'invention apparaîtront à la lumière de la description d'un mode de réalisation, faite ci-après en référence aux dessins annexés dans lesquels :
- La **FIG.1** est une vue en perspective montrant un premier exemple de réalisation d'un dispositif de manutention de récipients, qui comprend une roue de transfert et un dispositif de refroidissement des fonds des récipients ;
- La **FIG.2** est une vue en perspective du dispositif de refroidissement équipant le dispositif de manutention de la **FIG.1** **;**
- La **FIG.3** est une vue de détail en perspective, en arraché et à plus grande échelle, d'un dispositif de refroidissement ;
- La **FIG.4** est une vue en coupe du dispositif de refroidissement, selon le plan IV-IV de la **FIG.2** ; le circuit d'alimentation est découpé pour rendre la vue plus compacte ;
- La **FIG.5** est une vue de détail en coupe du dispositif de refroidissement ;
- La **FIG.6** et la **FIG.7** sont des vues en coupe du dispositif de refroidissement selon le plan IV-IV de la **FIG.2****,** illustrant deux configurations différentes adaptées au refroidissement de récipients de tailles différentes ;
- La **FIG.8** est une vue similaire à la **FIG.2****,** montrant un dispositif de refroidissement selon un deuxième exemple de réalisation.

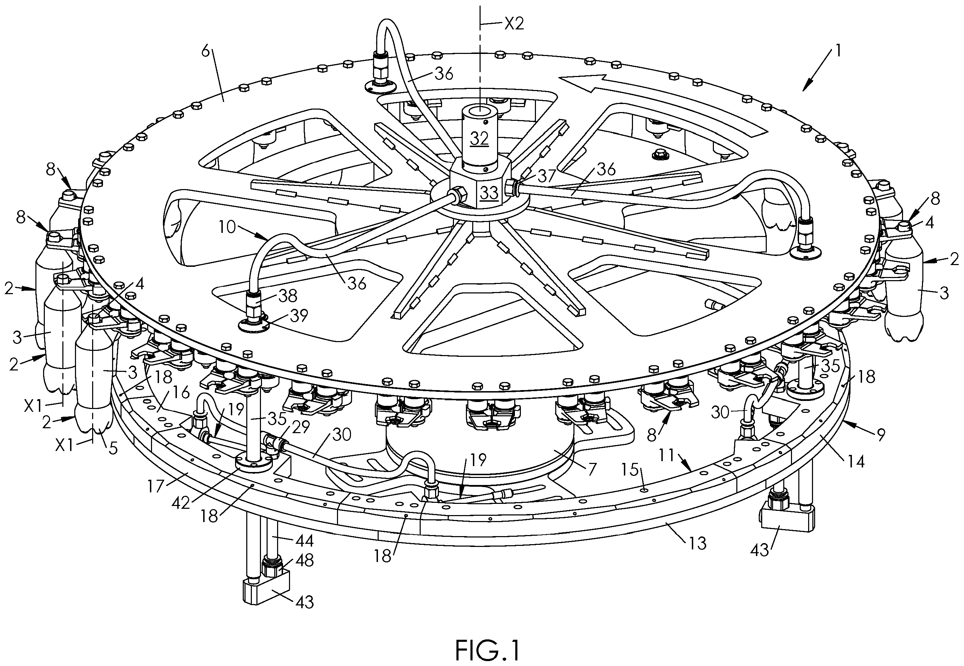

Sur la **FIG.1** est représenté un dispositif **1** de manutention de récipients **2** en matière plastique (par ex. en PET). Chaque récipient **2** comprend un corps **3** qui s'étend selon un axe **X1** principal, un col **4** qui s'ouvre à une extrémité supérieure du corps **3,** et un fond **5** qui ferme le corps **3** à une extrémité inférieure de celui-ci.

Les récipients **2** sont issus d'une opération de formage par soufflage ou étirage soufflage, conduite dans une souffleuse et qui a consisté à injecter, dans une ébauche préalablement chauffée à une température supérieure à la température de transition vitreuse de la matière et placée dans un moule équipant la souffleuse, un fluide (typiquement de l'air) sous pression pour donner à l'ébauche l'empreinte du moule correspondant au récipient **2.**

Chaque récipient **2** ainsi formé doit ensuite être transféré vers une remplisseuse, où un produit sera déversé dans le récipient par son col **4.** A cet effet, le dispositif **1** de manutention comprend au moins une roue **6** de transfert.

Dans un exemple non illustré, le dispositif **1** de manutention comprend plusieurs roues **6** de transfert, tangentes, synchronisées. Par souci de simplicité, on ne décrit ici qu'une roue **6** de transfert.

La roue **6** de transfert est entraînée en rotation autour d'un axe **X2** vertical. Le mouvement de rotation est procuré par un moteur auquel est accouplée la roue **6.** Ce moteur (de préférence électrique, du type sans balais) n'est pas visible sur les dessins ; il est ici abrité par un carter **7** qui forme également un socle pour la roue **6.**

Comme illustré sur la **FIG.1****,** la roue **6** est pourvue, sur une périphérie, d'une pluralité d'organes **8** individuels de préhension des récipients **2** par leur col **4.**

Dans l'exemple illustré, ces organes **8** de préhension sont des pinces qui comprennent chacune une paire de mors articulés entre une position ouverte et une position fermée. Le passage de la position fermée à la position ouverte est par ex. commandé par une came sur laquelle circule un galet solidaire de l'un des mors. Le passage de la position ouverte à la position fermée peut se faire par libération du galet et rappel élastique des mors l'un vers l'autre au moyen d'un ressort. Les récipients **2** ainsi suspendus à la roue **6** de transfert sont positionnés de sorte que leur axe **X1** principal est parallèle à l'axe **X2** de rotation de la roue **6** (et donc vertical).

Le fond **5** de chaque récipient **2,** dont l'épaisseur est supérieure à celle du corps **3,** est encore chaud lorsque le récipient **2** sort de son moule. Aussi le transfert des récipients **2** est-il mis à profit pour refroidir leurs fonds **5.**

A cet effet, le dispositif **1** de manutention comprend un dispositif **9** de refroidissement des fonds **5** par voie sèche. Ce dispositif **9** de refroidissement est conçu pour accompagner les récipients **2** maintenus par les organes **8** de préhension de la roue **6** de transfert.

Le dispositif **9** de refroidissement comprend, en premier lieu, un circuit **10** d'alimentation en gaz sous pression. Le gaz est de préférence de l'air. La pression du gaz est par ex. de 7 bars. Il peut s'agir d'air en provenance d'un circuit pneumatique classique, ou du circuit d'alimentation de la souffleuse en air sous pression destiné au formage des récipients **2,** ou de l'air de recyclage qui a servi au formage du récipient.

Le dispositif **9** de refroidissement comprend, en deuxième lieu, un collecteur **11** monté sous la roue **6** de transfert et solidaire en rotation de celle-ci. Dans l'exemple illustré, le collecteur **11** s'étend en boucle fermée (ici sous forme annulaire) autour de l'axe **X2** de rotation.

Dans une forme préférée d'exécution, le diamètre hors tout du collecteur **11** est inférieur au diamètre hors tout de la roue **6** de transfert, organes **8** de préhension compris.

Le collecteur **11** présente une paroi **11A** externe et une **11B** paroi interne opposées. Les parois **11A, 11B** s'étendent chacune en boucle fermée autour de l'axe **X2** de rotation.

Le collecteur **11** est pourvu d'un canal **12** périphérique de distribution du gaz. Selon un mode préféré de réalisation, le collecteur **11** comprend une embase **13** annulaire plate, et un cerclage **14** creux rapporté, fixé sur l'embase **13** par ex. au moyen de vis. A cet effet, le cerclage **14** est percé de trous **15** pour le passage de ces vis, que l'on n'a pas représentées.

Pour simplifier la fabrication du collecteur **11,** il est avantageux que le cerclage **14** soit formé de plusieurs segments **16, 17** aboutés. Il en va de même de l'embase **13.**

Le collecteur **11** est de préférence réalisé dans une matière plastique, par ex. en polyoxyméthylène (POM). Ce matériau présente les avantages combinés suivants : rigidité, facilité d'usinage, légèreté et isolant thermiquement.

Le canal **12** peut être formé par des perçages ou des rainures pratiqué(e)s dans les segments **16, 17.**

Le collecteur **11** est percé d'ouvertures **18** orientées vers les fonds **5** des récipients **2.** Le nombre d'ouvertures **18** est avantageusement égal au nombre d'organes **8** de préhension équipant la roue **6** de transfert. De la sorte, chaque récipient **2** dispose de sa propre ouverture **18,** par laquelle le gaz est propulsé vers le fond **5** pour le refroidir.

Selon un mode préféré de réalisation, les ouvertures **18** sont inclinées par rapport à la verticale (c'est-à-dire par rapport à l'axe **X1** des récipients **2,** ou encore par rapport à l'axe **X2** de rotation de la roue **6),** d'un angle noté **A1.**

L'angle **A1** d'inclinaison des ouvertures **18** est avantageusement compris entre 30° et 60°.

Avantageusement, dans le cas de plusieurs roues de transfert 6 montées en série, tangentes et synchronisées l'une par rapport à l'autre, l'inclinaison des ouvertures 18 permet un refroidissement continue lors du passage d'une roue de transfert à une autre roue de transfert équipées du dispositif de refroidissement 9. En d'autres termes, au point de tangence de deux roues de transfert, le fond du récipient est refroidit par deux dispositifs de refroidissement 9 simultanément.

Le dispositif **9** de refroidissement comprend une pluralité d'injecteurs **19** raccordés au circuit **10** d'alimentation et branchés sur le collecteur **11.** Plus précisément, chaque injecteur **19** est branché sur la paroi **11B** interne du collecteur **11.** Chaque injecteur **19** est configuré pour refroidir une fraction du gaz issu du circuit **10** d'alimentation et injecter cette fraction refroidie dans le canal **12** périphérique de distribution du collecteur **11.**

Selon un mode préféré de réalisation, chaque injecteur **19** est un tube de Ranque-Hilsch, également appelé « tube vortex ». Un modèle convenant à la présente architecture est le modèle Vortex 106 commercialisé par la société Vortec.

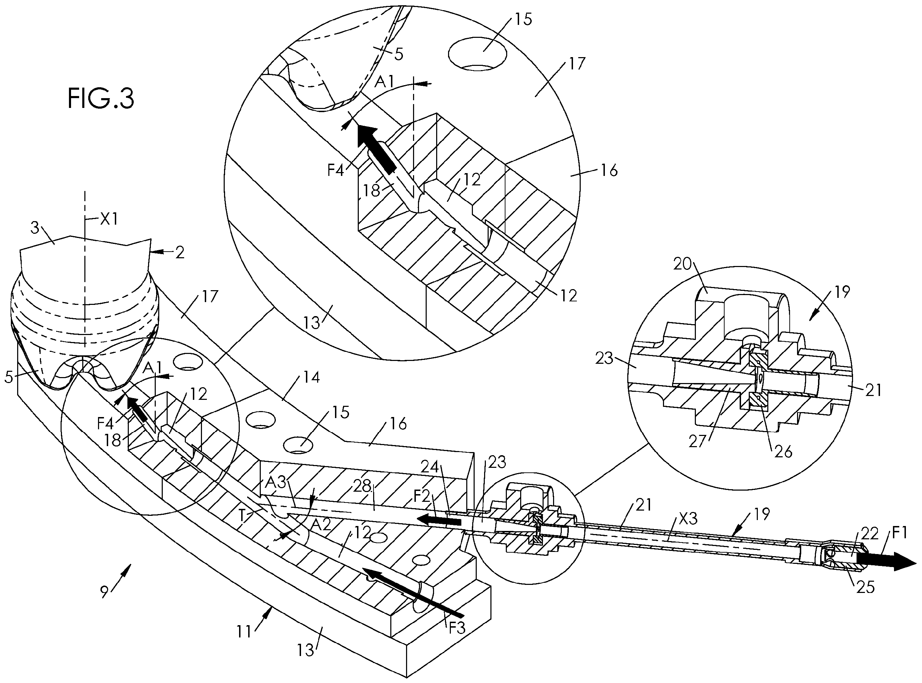

Dans cette forme de réalisation, illustrée sur les dessins, et en particulier sur la **FIG.3****,** chaque injecteur **19** comprend :
- Un bloc **20** d'injection, par lequel entre le gaz en provenance du circuit **10** d'alimentation,
- Un canon **21,** qui fait saillie du bloc **20** d'injection et se termine par une sortie **22** externe,
- Une buse **23,** qui fait saillie du bloc **20** d'injection à l'opposé du canon **21** et se termine par une sortie **24** interne,
- Un restricteur **25** de débit, logé dans le canon **21** au niveau de la sortie **22** externe ;
- Un générateur **26** de vortex, logé dans le bloc **20** d'injection du côté du canon **21** et qui inclut un corps annulaire percé d'ouvertures tangentielles, et
- Un venturi **27,** logé dans le bloc **20** d'injection du côté de la buse **23** et adossé au générateur **26** de vortex.

Sommairement, le fonctionnement de cet injecteur **19** est le suivant. L'air sous pression en provenance du circuit **10** d'alimentation est introduit par le bloc **20** d'injection. L'air est forcé de traverser les ouvertures tangentielles du générateur **26** de vortex, qui imposent au flux un mouvement tourbillonnaire. Le tourbillon ainsi généré est canalisé par le canon **21** vers la sortie **22** externe.

Le flux tourbillonnaire (dit ascendant) parcourant ainsi le canon **21** est chauffé par frottement à une température supérieure à 50°C (et qui peut atteindre 100°C). Cependant le restricteur **25** de débit ne laisse passer qu'une fraction de ce flux, dont une autre fraction (appelée flux descendant) est réfléchie et reparcourt le canon **21** en sens inverse.

Ce faisant, le flux descendant est refroidi par échange thermique avec le flux ascendant ; lorsqu'il traverse le venturi **27,** le gaz du flux descendant se détend et sa température décroit encore. La température du flux descendant est inférieure à 0°C. Elle peut descendre jusqu'à -40°C environ.

Le flux descendant (fraction refroidie du gaz issu du circuit **10** d'alimentation) est alors injecté par la sortie **24** interne dans le canal **12** périphérique de distribution du collecteur **11.**

Selon un mode préféré de réalisation illustré sur les dessins, et plus particulièrement sur la **FIG.3****,** chaque injecteur **19** est orienté suivant un axe **X3** qui forme, avec une tangente **T** au canal **12** périphérique de distribution, un angle **A2** aigu.

En pratique, le collecteur **11** comprend un alésage **28** percé selon l'axe **X3** et qui débouche dans le canal **12** périphérique de distribution : c'est dans cet alésage **28** que débouche la sortie **24** interne de l'injecteur **19.** Dans la forme de réalisation illustrée sur la **FIG.3****,** l'un des segments **16** du collecteur **11** présente une extension latérale dans laquelle est pratiqué l'alésage.

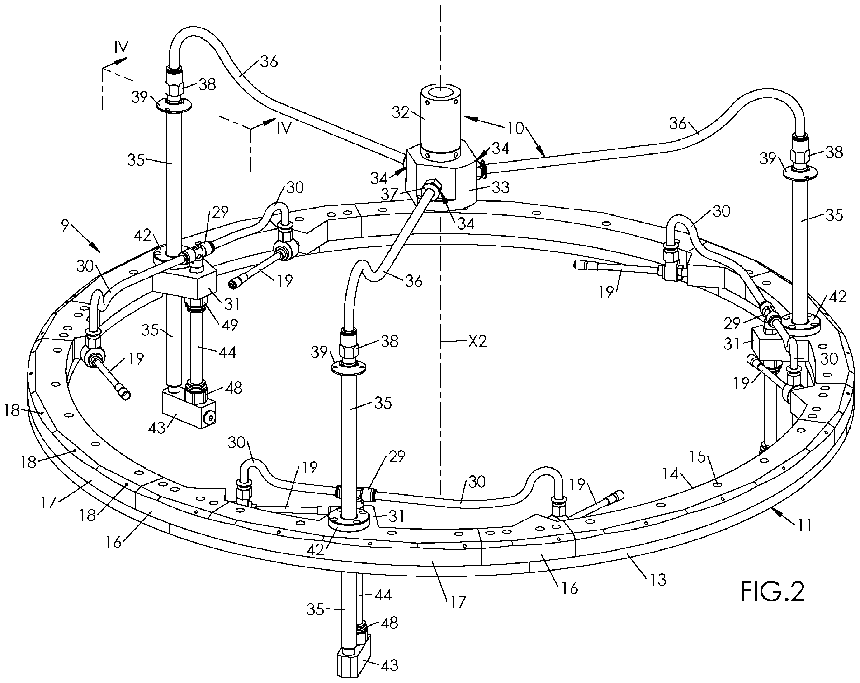

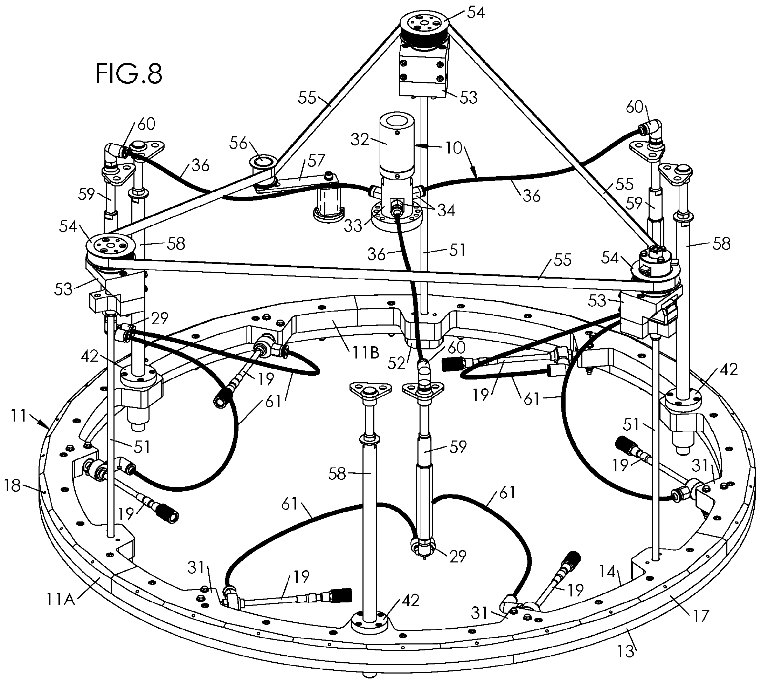

Selon un mode préféré de réalisation, le dispositif **9** de refroidissement comprend au moins deux injecteurs **19.** Les injecteurs **19** sont au nombre de six dans les exemples illustrés sur les **FIG.2** et **FIG.8****.**

Dans des exemples illustrés sur la **FIG.2** et sur la **FIG.8****,** le circuit **10** d'alimentation comprend un raccord **29** double et une paire de tuyaux **30** qui relient chacun le raccord **29** double à un injecteur **19.** Dans un premier exemple illustré sur la **FIG.2****,** le raccord **29** double est un raccord en T fixé sur le collecteur **11** (et plus précisément sur une protubérance **31** qui fait saillie de la paroi **11B** vers l'intérieur du collecteur **11.**

Comme on le voit sur les dessins, en plus particulièrement sur les **FIG.1****,** **FIG.2****,** **FIG.4** et **FIG.8****,** le circuit **10** d'alimentation comprend un joint **32** tournant, raccordé à une source (non représentée) de gaz sous pression. Le circuit **10** d'alimentation comprend par ailleurs un distributeur **33** fluidique, fixé sur la roue **6.** Le distributeur 33 est monté en rotation par rapport au joint **32** tournant, avec lequel il communique fluidiquement.

Le distributeur **33** comprend plusieurs sorties **34** chacune reliée à au moins un (ou conjointement à plusieurs) injecteur(s) **19.**

Plus précisément, dans les configurations illustrées **(****FIG.2** et **FIG.8****),** le distributeur **33** comprend trois sorties **34** chacune reliée à deux injecteurs **19** via un raccord **29** double.

Le collecteur **11** est réglable en position verticale par rapport à la roue **6** de transfert, de sorte à permettre un ajustement de la position des ouvertures **18** au plus près des fonds **5** des récipients **2** (dont la taille peut varier d'un modèle à l'autre).

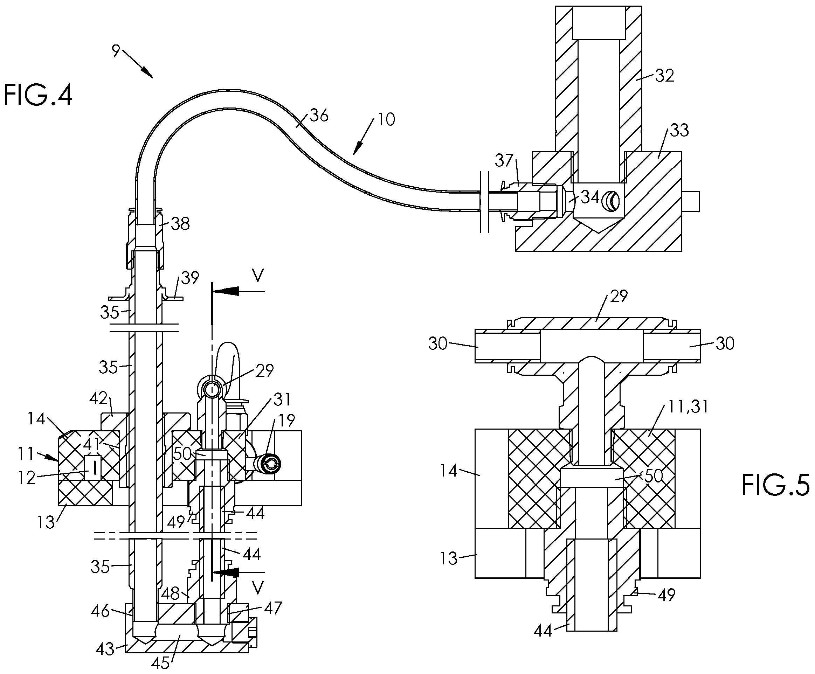

Dans un premier exemple de réalisation illustré sur la **FIG.2** et sur les **FIG.4** à **FIG.7****,** c'est une configuration particulière du circuit **10** d'alimentation qui permet ce réglage en position du collecteur **11.**

En effet, dans cet exemple le circuit **10** d'alimentation comprend au moins un tube **35** par lequel circule le gaz et qui forme une glissière guidant la translation verticale du collecteur **11** lors de son réglage en position.

Le tube **35** relie le distributeur **33** à au moins un injecteur **19.** Le raccordement du tube **35** au distributeur **33** se fait par ex. par une tubulure **36** branchée d'une part sur une sortie **34** du distributeur **33** (par ex. au moyen d'un raccord **37** à vis ou d'un raccord rapide à encliquetage) et d'autre part sur une extrémité supérieure du tube (par ex. au moyen d'un raccord **38** à vis).

Dans ce premier exemple, le circuit **10** d'alimentation comprend trois tubes **35** de ce type, qui relient chacun le distributeur **33** à une paire d'injecteurs **19** via un raccord **29** en T.

Ce tube **35** est rigide ; il est par ex. métallique. Le tube **35** est avantageusement solidaire de la roue **6** de transfert. A cet effet, le tube **35** porte, au voisinage d'une extrémité supérieure, une plaque **39** de fixation par laquelle le tube **35** est fixé (par ex. par vissage) sur la roue **6** de transfert.

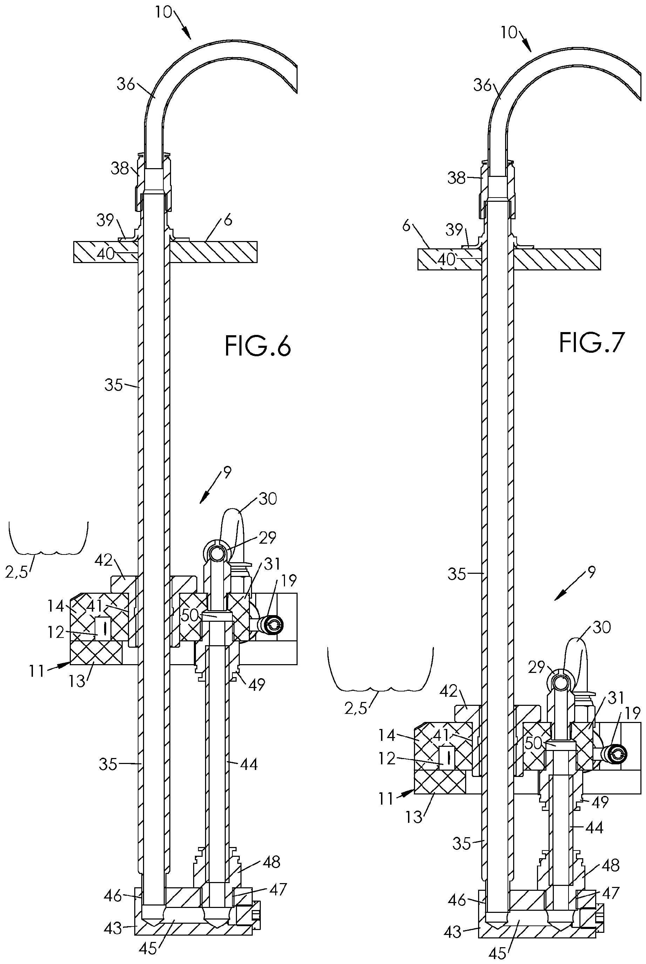

Comme on le voit sur la **FIG.6****,** le tube **35** s'étend au travers d'une ouverture **40** supérieure pratiquée dans la roue **6** de transfert. Par ailleurs, le tube **35** s'étend au travers d'une ouverture **41** inférieure, coaxiale à l'ouverture **40** supérieure et pratiquée dans le collecteur **11.** L'ouverture **41** inférieure est déportée, par rapport au canal **12** de distribution, de préférence vers l'intérieur du collecteur **11.** Comme illustré notamment sur les **FIG.4****,** **FIG.6** et **FIG.7****,** un coussinet **42** est intercalé entre le collecteur **11** et le tube **35** pour minimiser les frottements entre eux.

Dans ce premier exemple de réalisation, le circuit **10** d'alimentation comprend :
- Une noix **43** de liaison sur laquelle le tube **35** est branché par une extrémité inférieure, et
- Une canule **44** qui, par une extrémité inférieure, est branchée sur la noix **43** de liaison et, par une extrémité supérieure, est solidaire du collecteur **11.**

La noix **43** de liaison se présente par ex. sous forme d'une pièce (métallique ou plastique) percée d'un canal **45** central et d'une paire d'ouvertures **46, 47** qui débouchent dans le canal **45** central et sur laquelle sont branchées respectivement le tube **35** et la canule **44.**

La canule **44** est avantageusement branchée sur la noix **43** de liaison au moyen d'un raccord **48** à vis (ou d'un raccord rapide à encliquetage). Par ailleurs, la canule **44** est avantageusement fixée au collecteur **11** (au niveau de la protubérance **31)** au moyen d'un raccord **49** à vis (ou d'un raccord rapide à encliquetage).

La canule **44** communique fluidiquement avec le raccord **29** en T. A cet effet, la protubérance **31** est percée d'un trou **50** traversant, à une extrémité supérieure duquel est branché le raccord **29** en T, et à une extrémité inférieure duquel est branchée la canule **44.**

Ainsi fixée, la canule **44** est démontable ; on peut ainsi monter une canule **44** longue (adaptée à des récipients **2** de petite capacité, **FIG.6****)** ou une canule **44** courte (adaptée à des récipients **2** de grande capacité, **FIG.7****).**

Le gaz (en pratique, l'air) issu de la source sous pression passe par le joint **32** tournant puis le distributeur **33,** d'où il est injecté, via la tubulure **36,** dans le (ou chaque) tube **35.** Le gaz descend alors verticalement le long du tube **35** vers la noix **43** de liaison qu'il traverse transversalement pour remonter ensuite via la canule **44** vers le raccord **29** double (en T), d'où il est réparti vers les injecteurs **19.**

De l'air qui entre dans chaque injecteur **19,** une fraction réchauffée est évacuée vers la sortie externe (flèche **F1** sur la **FIG.3****),** tandis qu'une fraction refroidie est injectée par la sortie interne (flèche **F2** sur la **FIG.3****)** dans le canal **12** périphérique de distribution dans lequel l'air circule à sens unique (ici dans le sens horaire comme indiqué par la flèche **F3** sur la **FIG.2****,** compte tenu de l'inclinaison des axes **X3** des injecteurs **19** selon l'angle **A1**).

L'air (sous pression) froid et sec est alors pulsé vers les fonds **5** des récipients **2** par les ouvertures **18** (flèche F4 sur la **FIG.3****).**

Pour régler la position verticale du collecteur **11** (et donc des ouvertures **18** par lesquelles sort l'air froid destiné à être propulsé sur les fonds **5** des récipients **2**), on démonte la canule **44,** on fait glisser (vers le haut ou vers le bas) le collecteur **11** sur le tube **35,** puis on remonte une autre canule **44** de taille différente de celle qui a été démontée.

La double fonction du tube **35** (canalisation du gaz ; glissière permettant la translation verticale du collecteur **11**) procure simplicité de réglage, légèreté et compacité au dispositif **1** de manutention.

L'efficacité du refroidissement n'est pas altérée par cette structure. Au contraire : le mouvement unidirectionnel du gaz dans le canal **12** périphérique, induit par l'inclinaison des axes **X3** des injecteurs, diminue d'ailleurs les pertes de charge et contribue à l'efficacité.

Selon un deuxième exemple de réalisation illustré sur la **FIG.8****,** le réglage en position verticale du collecteur **11** est réalisé au moyen de tiges **51** filetées. Chaque tige **51** filetée est en prise hélicoïdale, par une portion inférieure, avec un écrou **52** solidaire du collecteur **11** (ou qui lui est intégré).

Chaque tige **51** filetée est fixée sur la roue **6** par l'intermédiaire d'un bloc **53.**

Dans l'exemple illustré sur la **FIG.8****,** les tiges **51** filetées sont au nombre de trois.

Par une portion supérieure, chaque tige **51** filetée est solidaire d'un pignon **53.**

L'une au moins des tiges **51** filetées est actionnée soit manuellement avec par exemple une manivelle ou soit par un actionneur tel qu'un moteur. Dans l'exemple illustré sur la **FIG.8****,** seule l'une des tiges **51** filetées est motorisée ; sa rotation est transmise aux autres tiges **51** filetées par l'intermédiaire d'une courroie **55** qui circule sur les pignons **53.** La tension de la courroie **55** peut être réglée par l'intermédiaire d'un galet **56** tendeur monté sur un excentrique **57.Dans** ce deuxième exemple de réalisation, le guidage en translation verticale du collecteur **6** est réalisé au moyen de glissières **58** verticales qui se présentent ici sous forme de tiges. Les glissières sont fixées, par une extrémité supérieure, sur la roue **6** et, par une portion inférieure, sont montées coulissantes par rapport au collecteur **11** en étant emmanchées dans des coussinets **42** de la même manière que dans le premier exemple de réalisation précédemment décrit.

L'alimentation fluidique des injecteurs **19** est réalisée par l'intermédiaire de tubes **59.** Chaque tube **59** est raccordé, d'une part, par une embouchure **60** supérieure, au distributeur **33** via une tubulure **36** et d'autre part, à deux injecteurs **19,** par un raccord **29** double (monté à une extrémité inférieure du tube **58**), via des flexibles **61.**

Le gaz issu (en pratique, l'air) issu de la source sous pression passe par le joint **32** tournant puis le distributeur **33,** d'où il est injecté, via les tubulures **36,** dans chaque tube **59.** Le gaz descend alors verticalement le long du tube **59** vers le raccord **29** double d'où il est réparti vers les injecteurs **19.**

L'injection de l'air dans le collecteur **11** est réalisée de la même manière que précédemment décrit en référence au premier exemple de réalisation. L'air (sous pression) froid et sec est pulsé vers les fonds **5** des récipients **2** par les ouvertures **18** (flèche **F4** sur la **FIG.3**).

Pour régler la position verticale du collecteur **11** (et donc les ouvertures **18** par lesquelles sort l'air froid destiné à être propulsé sur les fonds **5** des récipients **2**), on actionne la manivelle ou le moteur de l'une des tiges **51** filetées. La rotation synchronisée des tiges **51** filetées (par l'intermédiaire de la courroie **55**) provoque l'ascension (ou la descente) du collecteur **11.** Le guidage du collecteur **11** est assuré par les glissières **58.** Les tubes **59,** solidaires de la roue **6,** demeurent fixes en translation verticale, la déformation des flexibles **61** absorbant les contraintes dues au déplacement du collecteur **11.**

L'architecture qui vient d'être présentée présente plusieurs avantages.

Que l'alimentation fluidique des injecteurs **19** et le guidage en translation du collecteur **11** soient couplés (premier exemple de réalisation, **FIG.2**) ou découplés (deuxième exemple de réalisation, **FIG.8**), l'encombrement radial du dispositif **1** de manutention demeure contenu, grâce :
- Au branchement des injecteurs **19** sur la paroi **11B** interne du collecteur **11,**
- Au montage du distributeur **33** fluidique sur la roue **6** et à la liaison de celui-ci aux injecteurs **19** via un circuit **10** d'alimentation qui demeure localisé à l'intérieur d'un volume balayé par le collecteur **11.**

## Revendications

1. Dispositif (**1**) de manutention de récipients (**2**) en matière plastique ayant chacun un corps (**3**), un col (**4**) et un fond (**5**), ce dispositif (**1**) comprenant :
- Une roue (**6**) de transfert pourvue, sur une périphérie, d'une pluralité d'organes (**8**) individuels de préhension des récipients (**2**) par leur col (**4**), cette roue (**6**) étant entraînée en rotation autour d'un axe (**X2**) vertical ;
- Un dispositif (**9**) de refroidissement des fonds (**5**) des récipients (**2**), qui comprend :
o Un circuit (**10**) d'alimentation en gaz sous pression ;
o Un collecteur (**11**) monté sous la roue (**6**) de transfert et solidaire en rotation de celle-ci, ce collecteur (**11**) présentant une paroi (**11B**) interne et une paroi (**11A**) externe opposées et étant pourvu d'un canal (**12**) périphérique de distribution du gaz et percé d'ouvertures (**18**) orientées vers les fonds (**5**) des récipients (**2**), ce collecteur (**11**) étant réglable en position verticale par rapport à la roue (**6**) de transfert en étant monté coulissant par rapport à des glissières (**35 ; 58**) solidaires de la roue (**6**) de transfert ;
o Une pluralité d'injecteurs (**19**) raccordés au circuit (**10**) d'alimentation, branchés sur le collecteur (**11**) et configurés pour refroidir une fraction du gaz issu de celui-ci et injecter cette fraction refroidie dans le canal (**12**) périphérique de distribution ;
Ce dispositif (**1**) étant **caractérisé en ce que** :
- Chaque injecteur (**19**) est branché sur la paroi (**11B**) interne du collecteur (**11**) ;
- Le dispositif (**9**) de refroidissement comprend un distributeur (**33**) fluidique, fixé sur la roue (**6**) de transfert et relié aux injecteurs (**19**).

2. Dispositif (**1**) selon la revendication **1, caractérisé en ce que** les glissières (**35 ; 58**) sont solidaires de la roue (**6**) de transfert.

3. Dispositif (**1**) selon la revendication 1 ou la revendication 2, **caractérisé en ce que** le circuit (**10**) d'alimentation comprend un raccord (**29**) double et une paire de tuyaux (**30**) ou de flexibles (**61**) qui relient chacun le raccord (**29**) double à un injecteur (**19**).

4. Dispositif (**1**) selon l'une des revendications précédentes, **caractérisé en ce que** chaque injecteur (**19**) est orienté suivant un axe (**X3**) qui forme, avec une tangente (**T**) au canal (**12**) périphérique de distribution, un angle (**A2**) aigu.

5. Dispositif (**1**) selon l'une des revendications précédentes, **caractérisé en ce que** les ouvertures (**18**) sont inclinées par rapport à la verticale.

6. Dispositif (**1**) selon la revendication 5, **caractérisé en ce que** l'angle (**A1**) d'inclinaison des ouvertures (**18**) est compris entre 30° et 60°.

7. Dispositif (**1**) selon l'une des revendications précédentes, **caractérisé en ce que** l'injecteur (**19**) est un tube de Ranque-Hilsch.

8. Dispositif (**1**) selon l'une des revendications précédentes, **caractérisé en ce que** le collecteur (**11**) est réalisé dans une matière plastique telle que polyoxyméthylène.

9. Dispositif selon l'une des revendications 1 à 8, **caractérisé en ce que** chaque glissière (**35**) forme un tube par lequel circule le gaz pour l'alimentation d'au moins un injecteur (**19**).

10. Dispositif (**1**) selon la revendication 9, **caractérisé en ce que** le circuit (**10**) d'alimentation comprend :
- Une noix (**43**) de liaison sur laquelle le tube (**35**) est branché par une extrémité inférieure, et
- Une canule (**44**) qui, par une extrémité inférieure, est branchée sur la noix (**43**) de liaison et, par une extrémité supérieure, est solidaire du collecteur (**11**).

11. Dispositif selon l'une des revendications 1 à 8, **caractérisé en ce qu'**il comprend des tiges (**51**) filetées synchronisées, fixées, par une extrémité supérieure, à la roue (**6**), chaque tige (**51**) filetée étant en prise hélicoïdale avec un écrou (**52**) solidaire du collecteur (**11**).

12. Dispositif selon la revendication 11, **caractérisé en ce qu'**il comprend des tubes (**59**) reliés chacun, par une embouchure supérieure, au distributeur (**33**) et, par un raccord (**29**) double, à deux injecteurs (**19**) par l'intermédiaire de flexibles (**61**).

## Patentansprüche

1. Vorrichtung (1) zur Handhabung von Behältern (2) aus Kunststoff, die jeweils einen Körper (3), einen Hals (4) und einen Boden (5) aufweisen, diese Vorrichtung (1) umfassend:
- Ein Übertragungsrad (6), das auf einem Umfang mit einer Mehrzahl von einzelnen Organen (8) zum Greifen der Behälter (2) an ihrem Hals (4) versehen ist, wobei dieses Rad (6) um eine vertikale Achse (X2) gedreht wird;
- Eine Vorrichtung (9) zur Kühlung der Böden (5) der Behälter (2), die Folgendes umfasst:
o Einen Kreis (10) zur Versorgung mit Druckgas;
o Einen Kollektor (11), der unter dem Übertragungsrad (6) angebracht und drehfest mit diesem verbunden ist, wobei dieser Kollektor (11) eine Innenwand (11B) und eine Außenwand (11A) aufweist, die einander gegenüber liegen, und mit einem umlaufenden Kanal (12) zur Verteilung des Gases versehen und von Öffnungen (18) durchdrungen ist, die in Richtung der Böden (5) der Behälter (2) orientiert sind, wobei dieser Kollektor (11) in der vertikalen Position im Verhältnis zum Übertragungsrad (6) einstellbar ist, wobei er in Bezug auf Gleitführungen (35; 58) gleitend gelagert ist, die mit dem Übertragungsrad (6) fest verbunden sind;
o Eine Mehrzahl von Einspritzdüsen (19), die mit dem Versorgungskreis (10) verbunden sind, die an den Kollektor (11) angeschlossen und dazu ausgebildet sind, einen Anteil des aus diesem kommenden Gases zu kühlen und diesen gekühlten Anteil in den umlaufenden Verteilungskanal (12) einzuspritzen;
Wobei diese Vorrichtung (1) **dadurch gekennzeichnet ist, dass**:
- Jede Einspritzdüse (19) an der Innenwand (11B) des Kollektors (11) angeschlossen ist;
- Die Kühlvorrichtung (9) einen Fluidverteiler (33) umfasst, der auf dem Übertragungsrad (6) befestigt und mit den Einspritzdüsen (19) verbunden ist.

2. Vorrichtung (1) nach Anspruch 1, **dadurch gekennzeichnet, dass** die Führungsschienen (35; 58) mit dem Übertragungsrad (6) fest verbunden sind.

3. Vorrichtung (1) nach Anspruch 1 oder 2, **dadurch gekennzeichnet, dass** der Versorgungskreis (10) ein Doppelanschlussstück (29) und ein Paar Rohre (30) oder Schläuche (61) umfasst, die das Doppelanschlussstück (29) jeweils mit einer Einspritzdüse (19) verbinden.

4. Vorrichtung (1) nach einem der vorhergehenden Ansprüche, **dadurch gekennzeichnet, dass** jede Einspritzdüse (19) entlang einer Achse (X3) orientiert ist, die mit einer Tangente (T) des umlaufenden Verteilungskanals (12) einen spitzen Winkel (A2) bildet.

5. Vorrichtung (1) nach einem der vorhergehenden Ansprüche, **dadurch gekennzeichnet, dass** die Öffnungen (18) im Verhältnis zur Vertikalen geneigt sind.

6. Vorrichtung (1) nach Anspruch 5, **dadurch gekennzeichnet, dass** der Neigungswinkel (A1) der Öffnungen (18) zwischen 30° und 60° beträgt.

7. Vorrichtung (1) nach einem der vorhergehenden Ansprüche, **dadurch gekennzeichnet, dass** die Einspritzdüse (19) ein Ranque-Hilsch-Rohr ist.

8. Vorrichtung (1) nach einem der vorhergehenden Ansprüche, **dadurch gekennzeichnet, dass** der Kollektor (11) aus einem Kunststoff wie etwa Polyoxymethylen hergestellt ist.

9. Vorrichtung nach einem der Ansprüche 1 bis 8, **dadurch gekennzeichnet, dass** jede Führungsschiene (35) ein Rohr bildet, durch welches das Gas zur Versorgung wenigstens einer Einspritzdüse (19) strömt.

10. Vorrichtung (1) nach Anspruch 9, **dadurch gekennzeichnet, dass** der Versorgungskreis (10) Folgendes umfasst:
- Ein Verbindungsstück (43), an welches das Rohr (35) mit einem unteren Ende angeschlossen ist, und
- Eine Kanüle (44), die mit einem unteren Ende an dem Verbindungsstück (43) angeschlossen ist und mit einem oberen Ende mit dem Kollektor (11) fest verbunden ist.

11. Vorrichtung nach einem der Ansprüche 1 bis 8, **dadurch gekennzeichnet, dass** sie synchronisierte Gewindestangen (51) umfasst, die mit einem oberen Ende am Rad (6) befestigt sind, wobei jede Gewindestange (51) mit einer Mutter (52) in Schraubeingriff steht, die mit dem Kollektor (11) fest verbunden ist.

12. Vorrichtung nach Anspruch 11, **dadurch gekennzeichnet, dass** sie Rohre (59) umfasst, die jeweils mit einer oberen Mündung mit dem Verteiler (33) und mit einem Doppelanschlussstück (29) mittels Schläuchen (61) mit zwei Einspritzdüsen (19) verbunden sind.

## Claims

1. Device (**1**) for handling plastic containers (**2**) each having a body (**3**), a neck (**4**) and a bottom (**5**), this device (**1**) comprising:
- a transfer wheel (**6**) provided, on a periphery, with a plurality of individual members (**8**) for gripping the containers (**2**) by their neck (**4**), this wheel (**6**) being driven to rotate about a vertical axis (**X2**);
- a device (**9**) for cooling the bottoms (**5**) of the containers (**2**), which comprises:
o a pressurized-gas supply circuit (**10**);
o a manifold (**11**) mounted below the transfer wheel (**6**) and coupled in rotation thereto, this manifold (**11**) having an inner wall (**11B**) and an outer wall (**11A**) which are opposite and being provided with a peripheral gas-distribution channel (**12**) and pierced with openings (**18**) oriented towards the bottoms (**5**) of the containers (**2**), this manifold (**11**) being adjustable in a vertical position with respect to the transfer wheel (**6**) by being mounted slidably with respect to slides (**35; 58**) secured to the transfer wheel (**6**);
o a plurality of injectors (**19**) connected to the supply circuit (**10**) and connected to the manifold (**11**) and configured to cool a fraction of the gas coming therefrom and to inject this cooled fraction into the peripheral distribution channel (**12**);
this device (**1**) being **characterized in that**:
- each injector (**19**) is connected to the inner wall (**11B**) of the manifold (**11**);
- the cooling device (**9**) comprises a fluid distributor (**33**) which is fastened to the transfer wheel (**6**) and connected to the injectors (**19**).

2. Device (**1**) according to Claim 1, **characterized in that** the slides (**35; 58**) are secured to the transfer wheel (**6**).

3. Device (**1**) according to Claim 1 or Claim 2, **characterized in that** the supply circuit (**10**) comprises a double connector (**29**) and a pair of pipes (**30**) or of hoses (**61**) which each connect the double connector (**29**) to an injector (**19**).

4. Device (**1**) according to one of the preceding claims, **characterized in that** each injector (**19**) is oriented along an axis (**X3**) which forms an acute angle (**A2**) with a tangent (**T**) to the peripheral distribution channel **(12)** .

5. Device (**1**) according to one of the preceding claims, **characterized in that** the openings (**18**) are inclined with respect to the vertical.

6. Device (**1**) according to Claim 5, **characterized in that** the angle (**A1**) of inclination of the openings (**18**) is between 30° and 60°.

7. Device (**1**) according to one of the preceding claims, **characterized in that** the injector (**19**) is a Ranque-Hilsch tube.

8. Device (**1**) according to one of the preceding claims, **characterized in that** the manifold (**11**) is made from a plastic such as polyoxymethylene.

9. Device according to one of Claims 1 to 8, **characterized in that** each slide (**35**) forms a tube via which the gas for supplying at least one injector (**19**) moves.

10. Device (**1**) according to Claim 9, **characterized in that** the supply circuit (**10**) comprises:
- a connecting yoke (**43**) to which the tube (**35**) is connected via a lower end, and
- a cannula (**44**) which, via a lower end, is connected to the connecting yoke (**43**) and, via an upper end, is secured to the manifold (**11**).

11. Device according to one of Claims 1 to 8, **characterized in that** it comprises synchronized threaded rods (**51**) which are fastened, via an upper end, to the wheel (**6**), each threaded rod (**51**) being in helical engagement with a nut (**52**) secured to the manifold (**11**).

12. Device according to Claim 11, **characterized in that** it comprises tubes (**59**) each connected, via an upper mouth, to the distributor (**33**) and, via a double connector (**29**), to two injectors (**19**) by way of hoses **(61)** .
